# FASCICULE DE BREVET EUROPEEN

(11) **EP 0 456 743 B1**
(45) Date de publication et mention de la délivrance du brevet: **11.05.1994**
(21) Numéro de dépôt: 90903187.4
(22) Date de dépôt: 02.02.1990
(51) Int. Cl.: C03C 3/32, C03C 17/02, C03B 37/018

(54) **DEPOT EN PHASE VAPEUR D'UN VERRE FLUORE**
BESCHICHTUNG AUS DER DAMPFPHASE EINES FLUORIDGLASES
VAPOUR-PHASE DEPOSITION OF A FLUORIDE GLASS

(30) Priorité: 02.02.1989 FR 8901368
(43) Date de publication de la demande: 21.11.1991
(73) Titulaire: CENTRE NATIONAL DE LA RECHERCHE SCIENTIFIQUE, 75007 Paris (FR)
(72) Inventeur: JACOBONI, Charles, Paul, F-72380 Saint-Jamme (FR); BOULARD, Brigitte, Renée, Jacqueline, F-72000 Le Mans (FR)
(74) Mandataire: Nony, Michel
(86) Numéro de dépôt international: FR9000083
(87) Numéro de publication internationale: WO9008743

(56) Documents cités:
- Materials Science Forum, vol. 32-33, 1988, Trans Tech Publications, (CH), B. Boulard et al.: "Chemical vapour deposition of fluorides, molecular dynamics simulation of amorphous systems", pages 61-68, see page 61
- Revue de Physique Appliquee, vol. 21, No. 11, November 1986 (Paris, FR), J. Lucal: "Les nouveaux verres", pages 683-687, see page 685, left-hand column, paragraph 2
- Patent Abstract of Japan, vol. 9, No. 324 (C-320) (2047), 19 December 1985, & JP A 60155549 (Nithon ITA Glass K.K.) 15 August 1985
- Glass Technology, vol. 28, No. 1 1 February 1987, (Sheffield, GB), H. Poignant et al.: "The preparation of fluoride glass single mode fibers", pages 38-42, see page 40, right-hand column, last paragraph - page 41, left-hand column

## Description

La présente invention a pour objet un procédé de dépôt en phase vapeur d'un verre fluoré sur un substrat, ainsi que la composition vitreuse déposée sur un substrat ainsi obtenue.

On sait que certains mélanges de fluorures métalliques ont la propriété de donner des compositions vitrifiables. Les verres à base de fluorures métalliques sont communément appelés verres fluorés.

Les verres fluorés ont la propriété de présenter une large fenêtre de transparence (longueurs d'onde allant généralement de 0,3 à 8 micromètres) et en particulier une ultra-transparence dans l'intrarouge moyen, nettement supérieure à celle de la silice.

Le domaine d'application des verres fluorés peut donc s'étendre depuis les télécommunications à longues distances par fibres optiques à très faibles pertes, jusqu'aux fibres lasers pour la microchirurgie.

On sait que la préparation de fibres optiques nécessite des matériaux ayant une très grande pureté. En particulier, certains cations tels que le fer, le cobalt, le nickel, et... ne doivent pas être présents à raison de plus de 10 à 50 parties par milliard, de façon à obtenir des fibres optiques ayant de très faibles pertes.

Les procédés classiques de fabrication des pièces de verres fluorés par fusion et trempe entraînent une pollution importante par le contact avec les récipients utilisés pour la fusion et le coulage.

Il est donc très intéressant de pouvoir préparer des verres fluorés par dépôt en phase vapeur afin d'éviter de tels inconvénients.

Toutefois, les techniques usuelles de dépôt en phase vapeur ne sont pas utilisables en raison de la complexité chimique des systèmes vitreux fluorés.

En effet, les verres fluorés comportent généralement au moins quatre constituants. Or, si la composition de la vapeur en équilibre au-dessus de mélanges binaires peut généralement être prévue, l'introduction d'autres constituants rend l'évaporation plus complexe et les rapports théoriques des constituants de la phase vapeur ne sont plus respectés. En général, le mélange fondu s'enrichit en un ou plusieurs constituants moins volatils que les autres, de sorte que la modification de la composition du liquide à évaporer conduit rapidement à sortir du domaine thermique du liquidus. On constate alors que l'évaporation s'arrête, et que la composition présente dans le creuset cristallise.

C'est ainsi que le dépôt en phase vapeur d'un verre à base de fluorure de zirconium a été tenté sans succès ; voir par exemple H.Poignant et coll., Mat. Science Forum, 5, 79-84 (1985).

On a maintenant découvert qu'il est possible de déposer en phase vapeur certaines compositions vitreuses fluorées en fondant les constituants du verre à déposer dans un bain d'accueil constitué par un mélange fondu de fluorures formant lui-même une composition vitrifiable constituée d'éléments moins volatils que les fluorures du verre à déposer. Cette technique permet d'éviter les difficultés rencontrées dans la méthode d'évaporation directe, car on a découvert que la composition du "verre d'accueil" reste sensiblement constante, ou en tous cas varie suffisamment peu pour qu'il soit possible de maintenir le bain à l'état liquide. Il a été trouvé que ces résultats peuvent être obtenus lorsque la composition du bain d'accueil est une composition vitrifiable, c'est-à-dire une composition ayant un comportement analogue à celui d'un mélange eutectique.

La présente invention a donc pour objet un procédé de dépôt en phase vapeur d'un verre fluoré sur un substrat, ledit verre fluoré ayant la composition suivante (en mole % ; total 100%):
- 30-50 PbF₂
- 30-50 GaF₃
- 0-30 ZnF₂
- 1- 5 MF₂ (M=Mn,Cd)
- 1- 5 InF₃
- 0-10 AlF₃
- 0-10 d'adjuvant,
caractérisé par le fait que l'on met en contact ledit substrat avec les vapeurs provenant d'un bain fondu de fluorures métalliques comprenant un bain d'accueil ayant la composition suivante (en mole % ; total 100%) :
- 9-26 YF₃
- 19-28 BaF₂
- 35-40 InF₃
- 18-25 M'F₂ (M'=Mn,Cd,Zn)
- 0-10 d'adjuvant,
et comprenant en outre, dans les proportions relatives indiquées ci-dessus, les autres ingrédients du verre fluoré à déposer.

Dans des modes de réalisation particuliers, le procédé de l'invention peut encore présenter les caractéristiques, prises isolément ou en combinaison, qui vont être exposées ci-après.

La proportion initiale en masse du bain d'accueil par rapport à la masse totale du bain initial, est suffisamment importante pour maintenir une composition suffisamment stable du bain d'accueil. Cette proportion varie par exemple de 50% à 90%. Certains constituants du bain d'accueil notamment InF₃, MnF₂, CdF₂ et éventuellement les adjuvants) se retrouvent en faibles proportions dans le verre fluoré déposé. Le fluorure de zinc peut faire partie du bain d'accueil, mais il se retrouve alors également, en proportions qui peuvent être relativement importantes (par exemple de 10 à 30%), dans le verre déposé auquel il confère une stabilité accrue.

Pour obtenir le dépôt des vapeurs émanant du bain fondu, on opère par exemple dans une enceinte soumise à un vide dynamique de 10⁻⁴à 10⁻³ mbars, soit 10⁻² à 10⁻¹ Pa.

La température du bain fondu est une température suffisante pour obtenir une fusion complète des fluorures métalliques. De préférence, la température du bain fondu est supérieure de 50 °C à la température de fusion finissante sous la pression considérée. On opère généralement à une température de 500 à 650 °C.

Le substrat doit généralement être chauffé à une température qui est bien entendu inférieure à la température de transition vitreuse du verre à déposer. En effet, le dépôt opéré sur des substrats non-chauffés n'est pas adhérent. La température optimale du substrat peut être déterminée dans chaque cas par de simples expériences de routine. Elle est généralement de l'ordre de 100 à 200°C.

Le constituant du substrat peut être par exemple choisi parmi un verre fluoré, l'alumine, la silice, le carbone vitreux et un métal. Parmi les verres fluorés pouvant servir de substrat, on citera par exemple les verres à base de fluorure de zirconium ou de hafnium qui sont décrits notamment dans les demandes de brevet français n^{o}2.354.977 et 2.384.724.

Les compositions vitreuses qui peuvent être déposées en phase vapeur selon le procédé de l'invention sont connues. Elles sont décrites notamment dans la demande de brevet européen n^{o}0017566 et dans les demandes de brevet français n^{o}80.18139 (2.488.873) et 82.02698 (2.521.546).

L'adjuvant éventuellement présent dans le bain d'accueil et dans le verre à déposer est notamment constitué par un ou plusieurs fluorures métalliques, en particulier des fluorures métalliques dont les métaux sont en coordination octaédrique, comme par exemple les éléments 3d de la classification périodique, ou encore des fluorures alcalins (par exemple NaF ou LiF) ou des fluorures de terres rares.
Parmi les terres rares, on citera notamment : La, Er, Nd, Yb, Gd, Lu et Pr.

L'invention concerne en particulier les dépôts de verres fluorés, tels que définis ci-dessus, ne contenant pas d'adjuvants ou n'en contenant pas plus de 5%.

L'invention a également pour objet une composition vitreuse déposée sur un substrat, qui peut être obtenue notamment selon le procédé décrit ci-dessus. La composition est déposée sous la forme d'un film pouvant avoir quelques dizaines de micromètres d'épaisseur. Les compositions ainsi déposées sur le substrat peuvent servir notamment de guides d'onde dans l'infrarouge.

Le substrat peut avoir une forme quelconque, qui dépend de l'application envisagée:
- Il peut s'agir par exemple d'une plaque ou d'un cylindre;
- Le substrat peut également avoir la forme d'un tube creux sur lequel le verre fluoré est déposé intérieurement. Après une opération de rétreint, selon les méthodes connues, on peut obtenir une préforme de fibre optique dont le coeur est constitué par le verre fluoré déposé.

L'appareillage permettant d'effectuer le dépôt en phase vapeur de verres fluorés sur un substrat selon le procédé de l'invention est semblable à l'appareillage utilisé classiquement dans les méthodes de dépôt en phase vapeur. On va décrire à titre d'exemple un tel appareil.

L'évaporateur est constitué par une enceinte tubulaire, par exemple en verre Pyrex, soumise à un vide dynamique d'environ 10⁻⁴mbars (10⁻²Pa) au bas du tube, et 4.10⁻⁴mbars (4.10⁻² Pa) en haut du tube.

Les fluorures sont placés dans un creuset chimiquement inerte, par exemple en platine, disposé sur un support et chauffé par induction à l'aide d'une spire haute fréquence. Un porte-échantillon chauffant en aluminium est disposé en regard de la partie supérieure du creuset. Le porte-échantillon est muni d'un dispositif permettant de faire varier la distance du porte-échantillon au creuset. Des passages étanches assurent la connexion électrique pour le chauffage du porte-échantillon et l'entrée du thermocouple de mesure de température en contact avec le fond du creuset. Les phénomènes de conduction thermique, faibles pour des pressions de 10⁻⁴mbars, ne provoquent qu'un léger réchauffement du substrat (de l'ordre de 20 à 30°C).

Les dépôts sont réalisés sur un substrat poli et éventuellement décapé chimiquement.

Le rendement de l'opération (masse déposée/masse totale évaporée) est fonction de la distance creuset-substrat. La distance minimale est limitée par les effets d'échauffement du porte-échantillon (par proximité de la spire haute-fréquence) et par la vitesse trop rapide de déposition conduisant à des dépôts craquelés.

La distance optimale du creuset au porte-échantillon peut être déterminée dans chaque cas par de simples expériences de routine.

La distance creuset-substrat peut être comprise par exemple entre 4 et 8 cm.

On a observé que le rendement augmente généralement avec la température du substrat, en tenant compte des limites indiquées précédemment.

L'appareil permet d'obtenir des dépôts amorphes sous forme de films ayant une épaisseur de 40 à 50 micromètres. La durée d'évaporation est généralement comprise entre 30 et 90 minutes.

Le chauffage du substrat permet également une vitesse de trempe moins rapide et des évaporations assez longues qui induisent dans une certaine mesure un processus de recuit du dépôt, conduisant à des phases vitreuses plus stables.

Le contrôle de la vitesse de déposition est nécessaire pour obtenir des dépôts uniformes et adhérents au substrat. La montée en température peut être faite par exemple dans les conditions suivantes :
- de 20 à 500°C : 20°C/min.
- de 500 à 550°C : 5°C/min.
- à 550°C : palier de 5 min.
- de 550 à 600°C : 1°C/min.

La température du creuset est de préférence comprise entre 550°C et 580°C. A des températures supérieures, le régime d'évaporation peut devenir irrégulier et le dépôt risque de se fissurer.

Les spectres de diffraction X ont permis de confirmer le caractère vitreux des dépôts.

Les exemples suivants illustrent l'invention sans toutefois la limiter.

Dans ces exemples, le bain fondu de fluorures a été chauffé à une température de 550-570°C. Le temps de déposition était de 60 minutes.

L'épaisseur du dépôt obtenu était de 40 micromètres environ.

### EXEMPLES 1 à 6

La composition du bain d'accueil est la suivante (en mole %) :

15 YF₃ - 22 BaF₂ - 37 InF₃ - 21 MnF₂ - 5 LaF₃.

Les compositions de fluorures à évaporer, contenant essentiellement PbF₂, ZnF₂ et GaF₃, et éventuellement des quantités variables de fluorures d'aluminium sont mélangées avec la composition du bain d'accueil. Les fluorures PbF₂, ZnF₂ et GaF₃ sont présents à raison de 20% en masse, par rapport à la masse totale.

Le mélange de fluorures (environ 15g) est préalablement fondu dans un creuset de platine à 750°C à l'intérieur d'une boîte à gants. Après l'installation du creuset dans l'évaporateur sous atmosphère de gaz inerte (azote ou argon par exemple) on établit un vide dynamique de l'ordre de 10⁻⁴ à 4.10⁻⁴ mbars. Le creuset est ensuite porté à une température de 550-570°C, en procédant par étapes, comme indiqué ci-dessus, afin de maintenir constamment le système dans des conditions d'équilibre.

Pour arrêter l'évaporation, le chauffage est coupé, et la température du creuset diminue alors rapidement jusqu'à 400°C. A ce moment la pompe secondaire est coupée. Le vide primaire est maintenu pendant 30 minutes. Le rétablissement à la pression atmosphérique s'effectue par un remplissage de l'évaporateur avec un gaz inerte.

Le substrat est une pastille polie d'un verre ayant la composition suivante :

55 ZrF₄ - 31 BaF₂ -5 AlF₃ - 5 LaF₃ - 4 NaF

Les dimensions de la pastille sont : diamètre = 25 mm, épaisseur = 2,5 mm. La pastille est isolée du porte-échantillon en aluminium par un cache de platine.

Le substrat, distant d'environ 6 cm du haut du creuset, et isolé chimiquement du porte-échantillon par une couronne de platine, est maintenu à une température inférieure à la température de transition vitreuse du verre déposé. Une température de 100°C permet d'effectuer le dépôt pendant 60 minutes sans qu'il y ait amorce de cristallisation. La vitrification de la composition déposée est immédiate, mais pourrait être éventuellement consolidée ultérieurement par voie thermique. Après coupure du chauffage, on laisse le substrat se refroidir lentement sans intervention extérieure.

Les résultats obtenus sont résumés dans le tableau suivant :

| Ex. N^{O} | %AlF₃ ajouté | composition PbZnGa en moles | composition déposée en moles % | Tg °C | Tc °C |
|---|---|---|---|---|---|
| 1 | 0 | 36PbF₂ 24ZnF₂ 35GaF₃ | 11ZnF₂ 39PbF₂ 44GaF₃ 3InF₃ 2,9MnF₂ | 284 | 354 |
| 2 | 2 | 36PbF₂ 24ZnF₂ 35GaF₃ | 12.5ZnF₂ 37PbF₂ 45GaF₃ 2,5InF₃ 2,8MnF₂ 0,6AlF₃ | --- | 326 |
| 3 | 5 | 36PbF₂ 24ZnF₂ 35GaF₃ | 10ZnF₂ 36PbF₂ 43,5GaF₃ 1,5InF₃ 2,3MnF₂ 6,5AlF₃ | 260 | 320 |
| 4 | 2,5 | 25PbF₂ 50ZnF₂ 25GaF₃ | 25ZnF₂ 30PbF₂ 36GaF₃ 1,2InF₃ 1,8MnF₂ 5,1AlF₃ | --- | --- |
| 5 | 2,5 | 30PbF₂ 50ZnF₂ 20GaF₃ | 26ZnF₂ 35PbF₂ 30GaF₃ 3InF₃ 3,5MnF₂ 3,5AlF₃ | 290 | 382 |
| 6 | 2,5 | 34PbF₂ 40ZnF₂ 26GaF₃ | 17ZnF₂ 34,5PbF₂ 43GaF₃ 1InF₃ 2MnF₂ 3,5AlF₃ | 280 | 337 |
| 7 | 0 | 30PbF₂ 50ZnF₂ 20GaF₃ | 37PbF₂ 30ZnF₂ 30,4GaF₃ 1,5InF₃ 1CdF₂ | 287 | 304 |
| 8 | 0 | 20PbF₂ 50ZnF₂ 30GaF₃ | 25,6PbF₂ 31,6ZnF₂ 39GaF₃ 2,5InF₃ 1,3CdF₂ | | |

## Revendications

1. Procédé de dépôt en phase vapeur d'un verre fluoré sur un substrat, ledit verre fluoré ayant la composition suivante (en mole % ; total 100%) :
- 30-50 PbF₂
- 30-50 GaF₃
- 0-30 ZnF₂
- 1- 5 MF₂ (M=Mn,Cd)
- 1- 5 InF₃
- 0-10 AlF₃
- 0-10 d'adjuvant,
caractérisé par le fait que l'on met en contact ledit substrat avec les vapeurs provenant d'un bain fondu de fluorures métalliques comprenant un bain d'accueil ayant la composition suivante (en mole % ; total 100%) :
- 9-26 YF₃
- 19-28 BaF₂
- 35-40 InF₃
- 18-25 M'F₂ (M'=Mn,Cd,Zn)
- 0-10 d'adjuvant
et comprenant en outre, dans les proportions relatives indiquées ci-dessus, les autres ingrédients du verre fluoré à déposer.

2. Procédé selon la revendication 1, caractérisé par le fait que la proportion initiale en masse dudit bain d'accueil, par rapport à la masse totale du bain initial, est de 50% à 90%.

3. Procédé selon l'une quelconque des revendications précédentes, caractérisé par le fait que l'on opère dans une enceinte soumise à un vide dynamique de 10⁻²à 10⁻¹ Pa.

4. Procédé selon l'une quelconque des revendications précédentes, caractérisé par le fait que la température du bain fondu est de 500 à 650°C.

5. Procédé selon la revendication 4, caractérisé par le fait que ladite température est de 550 à 600°C.

6. Procédé selon l'une quelconque des revendications précédentes, caractérisé par le fait que ledit substrat est chauffé à une température inférieure à la température de transition vitreuse du verre à déposer.

7. Procédé selon l'une quelconque des revendications précédentes, caractérisé par le fait que le constituant dudit substrat est choisi parmi un verre fluoré, l'alumine, la silice, le carbone vitreux et un métal.

8. Procédé selon l'une quelconque des revendications précédentes, caractérisé par le fait que l'adjuvant éventuellement présent est un fluorure métallique.

9. Procédé selon la revendication 8, caractérisé par le fait que l'adjuvant est au moins un fluorure choisi parmi les fluorures des éléments 3d de la classification périodique, les fluorures de terres rares et les fluorures alcalins.

10. Procédé selon la revendication 9, caractérisé par le fait que ladite terre rare est choisie parmi La, Er, Nd, Yb, Gd, Lu et Pr.

11. Procédé selon l'une quelconque des revendications précédentes, caractérisé par le fait que ledit bain d'accueil contient du fluorure de zinc en quantité suffisante pour que le verre fluoré déposé contienne 10-30 mole % de ZnF₂.

12. Composition vitreuse déposée sur un substrat, caractérisée par le fait qu'elle est susceptible d'être obtenue selon le procédé de l'une quelconque des revendications précédentes.

## Claims

1. Process for the vapour phase deposition of a fluorinated glass on a substrate, said fluorinated glass having the following composition (in mole %; total 100%):
- 30-50 PbF₂
- 30-50 GaF₃
- 0-30 ZnF₂
- 1- 5 MF₂ (M=Mn,Cd)
- 1- 5 InF₃
- 0-10 AlF₃
- 0-10 admixture,
characterized by the fact that said substrate is brought into contact with the vapours originating from a molten bath of metal fluorides comprising a receiving bath having the following composition (in mole %; total 100%):
- 9-26 YF₃
- 19-28 BaF₂
- 35-40 InF₃
- 18-25 M'F₂ (M'=Mn,Cd,Zn)
- 0-10 admixture
and comprising, in addition, in the relative propotions indicated above, the other ingredients of the fluorinated glass to be deposited.

2. Process according to Claim 1, characterized by the fact that the initial proportion by mass of said receiving bath, relative to the total mass of the initial bath, is from 50% to 90%.

3. Process according to any one of the preceding Claims, characterized by the fact that the operation is carried out in an enclosure subject to a dynamic vacuum of 10⁻² to 10⁻¹ Pa.

4. Process according to any one of the preceding Claims, characterized by the fact that the temperature of the molten bath is from 500 to 650°C.

5. Process according to Claim 4, characterized by the fact that said temperature is from 550 to 600°C.

6. Process according to any one of the preceding Claims, characterized by the fact that said substrate is heated to a temperature lower than the vitreous transition temperature of the glass to be deposited.

7. Process according to any one of the preceding Claims, characterized by the fact that the constituent material of said substrate is chosen from among a fluorinated glass, alumina, silica, vitreous carbon and a metal.

8. Process according to any one of the preceding Claims, characterized by the fact that the admixture that may be present is a metallic fluoride.

9. Process according to Claim 8, characterized by the fact that the admixture is at least one fluoride chosen from among the fluorides of the 3d elements of the periodic system, the rare earth fluorides and the alkaline fluorides.

10. Process according to Claim 9, characterized by the fact that said rare earth is chosen from among La, Er, Nd, Yb, Gd, Lu and Pr.

11. Process according to any one of the preceding Claims, characterized by the fact that said receiving bath contains zinc fluoride in a quantity sufficient for the deposited fluorinated glass to contain 10-30 mole % of ZnF₂.

12. Vitreous composition deposited on a substrate, characterized by the fact that is is capable of being produced according to the process of any one of the preceding Claims.

## Patentansprüche

1. Verfahren zur Abscheidung eines Fluoridglases aus der Dampfphase auf einem Substrat, welches Fluoridglas die folgende Zusammensetzung (in Molá%; insgesamt 100 %) hat:
- 30-50 PbF₂
- 30-50 GaF₃
- 0-30 ZnF₂
- 1- 5 MF₂ (M=Mn, Cd)
- 1- 5 InF₃
- 0-10 AlF₃
- 0-10 Zusatzstoff,
dadurch gekennzeichnet, daß man das Substrat in Kontakt mit den Dämpfen bringt, die aus einem Schmelzbad von Metallfluoriden kommen, das ein Aufnahmebad mit der folgenden Zusammensetzung (in Molá%; insgesamt 100 %) aufweist:
- 9-26 YF₃
- 19-28 BaF₂
- 35-40 InF₃
- 18-25 M'F₂ (M'=Mn, Cd, Zn)
- 0-10 Zusatzstoff
und außerdem in den oben angegebenen relativen Anteilen die übrigen Bestandteile des abzuscheidenden Fluoridglases aufweist.

2. Verfahren nach dem Anspruch 1, dadurch gekennzeichnet, daß der Anfangsmassenanteil des Aufnahmebades im Verhältnis zur Gesamtmasse des Anfangsbades 50 bis 90 % ist.

3. Verfahren nach irgendeinem der vorstehenden Ansprüche, dadurch gekennzeichnet, daß man in einem Gehäuse arbeitet, das einem dynamischen Vakuum von 10⁻² bis 10⁻¹ Pa ausgesetzt wird.

4. Verfahren nach irgendeinem der vorstehenden Ansprüche, dadurch gekennzeichnet, daß die Temperatur des Schmelzbades 500 bis 650 °C ist.

5. Verfahren nach dem Anspruch 4, dadurch gekennzeichnet, daß die Temperatur 550 bis 600 °C ist.

6. Verfahren nach irgendeinem der vorstehenden Ansprüche, dadurch gekennzeichnet, daß das Substrat auf eine Temperatur unter der Glasübergangstemperatur des abzuscheidenden Glases erhitzt wird.

7. Verfahren nach irgendeinem der vorstehenden Ansprüche, dadurch gekennzeichnet, daß der das Substrat bildende Stoff unter einem Fluoridglas, Aluminiumoxid, Siliziumdioxid, glasartigem Kohlenstoff und einem Metall gewählt wird.

8. Verfahren nach irgendeinem der vorstehenden Ansprüche, dadurch gekennzeichnet, daß der eventuell vorliegende Zusatzstoff ein Metallfluorid ist.

9. Verfahren nach dem Anspruch 8, dadurch gekennzeichnet, daß der Zusatzstoff wenigstens ein Fluorid ist, das unter den Fluoriden der 3d-Elemente des Periodischen Systems, den Fluoriden von Seltenen Erden und den Alkalimetallfluoriden gewählt wird.

10. Verfahren nach dem Anspruch 9, dadurch gekennzeichnet, daß die Seltene Erde unter La, Er, Nd, Yb, Gd, Lu und Pr gewählt wird.

11. Verfahren nach irgendeinem der vorstehenden Ansprüche, dadurch gekennzeichnet, daß das Aufnahmebad das Zinkfluorid in einer ausreichenden Menge enthält, damit das abgeschiedene Fluoridglas 10 - 30 Mol-% ZnF₂ enthält.

12. Auf einem Substrat abgeschiedene glasartige Zusammensetzung, dadurch gekennzeichnet, daß sie geeignet ist, gemäß dem Verfahren nach irgendeinem der vorstehenden Ansprüche erhalten zu werden.
